# EUROPÄISCHE PATENTSCHRIFT

(11) **EP 1 018 616 B1**
(45) Veröffentlichungstag und Bekanntmachung des Hinweises auf die Patenterteilung: **07.01.2004**
(21) Anmeldenummer: 99126099.3
(22) Anmeldetag: 29.12.1999
(51) Int. Cl.: F16K 41/02, F16K 5/06

(54) **Absperrarmatur**
Shut-off valve
Soupape d'arrêt

(30) Priorität: 07.01.1999 DE 19900230
(43) Veröffentlichungstag der Anmeldung: 12.07.2000
(73) Patentinhaber: ASV Stübbe GmbH & Co. KG, D-32602 Vlotho (DE)
(72) Erfinder: Rasche, Karl-Horst, 32584 Löhne (DE)
(74) Vertreter: Zenz, Joachim Klaus, Dipl.-Ing.

(56) Entgegenhaltungen:
- EP-A- 0 202 666
- EP-A- 0 451 892
- EP-A- 0 623 770
- US-A- 4 141 538
- US-A- 5 056 758
- US-A- 5 232 201
- US-A- 5 586 749

## Beschreibung

Die Erfindung betrifft eine Absperrarmatur mit
- einem außern Gehäuse aus thermoplastischem Kunststoff, das eine Spindeldurchführung aufweist,
- einer Spindel, die in der Spindeldurchführung beweglich angeordnet und gegen das Gehäuse abgedichtet ist, und mit
- einem Schließkörper, der im Gehäuse angeordnet und mit der Spindel verbunden ist,
wobei die Spindel gegen das äußere Gehäuse abgedichtet ist, siehe beispielsweise die EP 0 451 892, die US 5 232 201 und die US 0 451 892.

Absperrarmaturen müssen in der Praxis zum Teil erheblichen Innendrücken standhalten, ohne undicht zu werden. Bei Beaufschlagung einer Absperrarmatur mit hohem Innendruck dehnt sich das Armaturengehäuse radial nach außen aus. Es sind Absperrarmaturen bekannt, deren zulässiger Verformungsgrad im Betrieb bis zu 6 % beträgt.

Bei Gehäusen aus thermoplastischem Material ist die Verformung im Vergleich zu Metallgehäusen verhältnismäßig groß. Ferner hat die Temperatur einen großen Einfluß auf die Verformbarkeit von thermoplastischen Kunststoffen, die bei hohen Temperaturen erweichen.

Die Praxis hat gezeigt, daß Absperrarmaturen mit einem Gehäuse aus thermoplastischem Kunststoff dazu neigen, bei hohem Innendruck undicht zu werden, und zwar im Bereich der Spindeldurchführung, wobei sich außerdem das Betätigungsmoment negativ ändert, d.h. die Leichtgängigkeit vermindert. Letzteres kann zu Problemen bei einer Betätigung der Armatur führen.

Der Erfindung liegt daher die Aufgabe zugrunde, eine Absperrarmatur zu schaffen, die auch bei Beaufschlagung mit erhöhtem Innendruck zuverlässig nach außen hin abdichtet und leichtgängig zu betätigen ist.

Diese Aufgabe wird erfindungsgemäß dadurch gelöst, daß das Gehäuse eine rinnenförmige Aussparung aufweist, die um die Spindeldurchführung herumläuft und zum Innenraum des Gehäuses hin offen ist.

Der Erfindung liegt die Erkenntnis zugrunde, daß sich eine im Querschnitt runde Spindeldurchführung bei radialer Verformung des Armaturengehäuses oval verformt und daß hierauf die aufgetretenen Undichtigkeiten und die auftretende Schwergängigkeit zurückzuführen sind.

Durch die Aussparung wird um die Spindelführung herum ein hülsenförmiger Bereich gebildet, dessen Querschnittsform bei einer Verformung des Gehäuses im wesentlichen konstant bleibt. Entsprechend bleibt bei einem erhöhten Innendruck im Gehäuse auch der Querschnitt der Spindeldurchführung unverändert. Dies gewährleistet zum einen eine zuverlässige Abdichtung auch bei bisher kritischen Innendrücken, zum anderen bleibt die Spindel trotz der Verformung des Armaturengehäuses leichtgängig und einfach zu bedienen, da keine Verspannungen auftreten.

Eine Verformung des Gehäuses könnte mit großen Materialanhäufungen an den kritischen Gehäusestellen unterbunden werden. Mit zunehmend großen Wandstärkensprüngen steigt bei der Gehäuseherstellung jedoch die Gefahr der Lunkerbildung. Lunker treten bei der Herstellung von Spritzgußteilen auf, wenn die Wärme beim Aushärten des Spritzgußteils unterschiedlich schnell abgeführt wird. Dies ist insbesondere bei einer großen Materialanhäufung - beispielsweise bei großen Wandstärkensprüngen - der Fall. Lunker können bei hohen Innendrücken zu einer Zerstörung der Absperrarmatur führen.

Erfindungsgemäß wird zwar eine Verformung des Gehäuses zugelassen, jedoch bleibt der für eine zuverlässige Abdichtung wesentliche Bereich des Gehäuses, also der Bereich der Spindeldurchführung, formstabil.

Ein vorteilhaftes Ausführungsbeispiels ist dadurch gekennzeichnet, daß zwischen der Spindel und der Spindeldurchführung wenigstens eine Dichtung angeordnet ist und daß sich die Ausnehmung in Achsrichtung der Spindel bis mindestens auf die Höhe der Dichtung erstreckt.

Die Dichtung liegt also in dem nicht von der Verformung des Gehäuses betroffenen formstabilen Bereich. Es hat sich als zusätzlicher Vorteil herausgestellt, daß ein in der Aussparung anliegender erhöhter Innendruck diesen Bereich gegen die Spindel preßt. Mit steigendem Innendruck steigt auch der Anpreßdruck und damit die Dichtwirkung der Dichtung. Die Dichtung kann entweder in einer Außennut in der Spindel oder in einer Innennut in der Spindeldurchführung angeordnet sein.

Eine besonders einfache Ausführungsform ergibt sich dadurch, daß die Dichtung als O-Ring ausgebildet ist und daß die Spindel drehbar in der Spindeldurchführung gelagert ist. Dadurch wird eine einfache, zuverlässige und standfeste Abdichtung geschaffen. Zwar ist es grundsätzlich möglich, die Spindel als Gewindespindel auszubilden, eine drehbare Lagerung der Spindel in der Spindeldurchführung führt jedoch zu einer kompakten und herstellungstechnisch günstigen Konstruktion.

In wesentlicher Weiterbildung der Erfindung wird vorgeschlagen, daß die Spindeldurchführung teilweise von einem Gehäuseansatz umgeben ist und daß sich die Aussparung bis in den Gehäuseansatz hineinerstreckt. Eine derartige Konstruktion hat insbesondere spritzgußtechnische Vorteile.

Weitere vorteilhafte Ausführungsformen sind in den Unteransprüchen gekennzeichnet.

Die Erfindung wird im folgenden anhand eines bevorzugten Ausführungsbeispiels im Zusammenhang mit der beiliegenden Zeichnung näher erläutert. Die Zeichnung zeigt in:

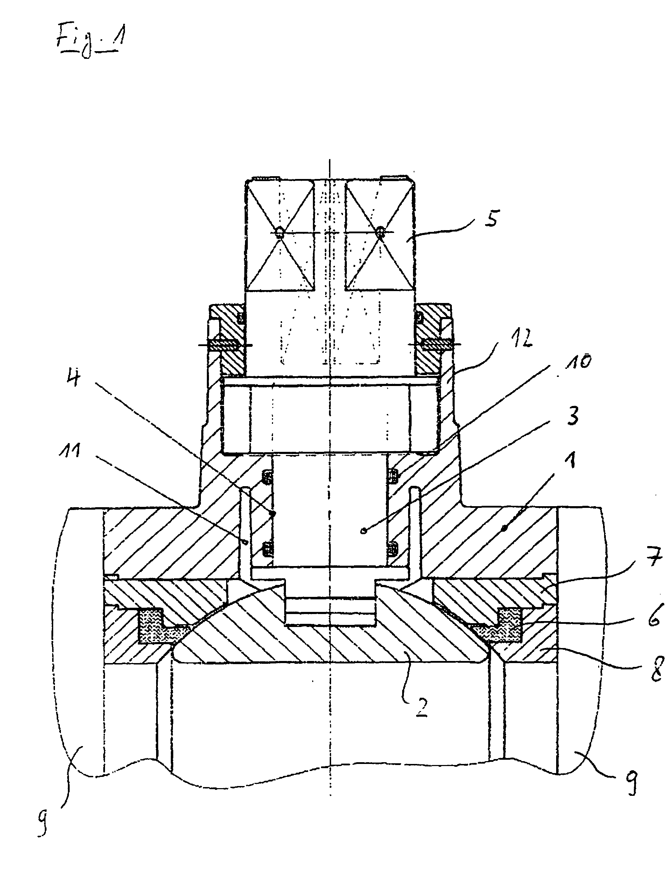

- Figur 1: einen Axialschnitt durch eine erfindungsgemäße Absperrarmatur, wobei zur Verdeutlichung der Erfindung lediglich die obere Hälfte der Armatur gezeigt ist.

Die dargestellte Absperrarmatur weist ein Gehäuse 1 auf, in dem ein als Ventilkugel ausgebildeter Schließkörper 2 drehbar angeordnet ist. Der Schließkörper 2 ist mit einer Spindel 3 verbunden, die in einer Spindeldurchführung 4 des Gehäuses 1 drehbar gelagert ist. Die Spindel 3 weist an ihrem oberen Ende ein Kupplungsstück für ein lose aufgesetztes Bedienungselement auf, im vorliegenden Fall einen im Querschnitt mehrkantigen Spindelansatz 5, auf den beispielsweise ein Handrad oder ein Betätigungsgriff aufsetzbar ist, über den die Armatur geschlossen und geöffnet werden kann.

Das Gehäuse 1 enthält ferner zwei im Querschnitt winkelförmig ausgebildete Dichtringe 6, die jeweils zwischen zwei Klemmringen 7, 8 aufgenommen sind und deren axiale Schenkel zur Abdichtung stirnseitig an dem Schließkörper 2 anliegen. Einlaß- und auslaßseitig ist das Gehäuse mit (lediglich schematisch angedeuteten) Spitzenden 9 versehen, die dazu dienen, die Armatur mit Anschlußleitungen zu verbinden.

In der Spindeldurchführung 4 sind zwei Dichtungen 10 in Form von O-Ringen angeordnet, die die Absperrarmatur nach außen hin abdichten.

Wird die Absperrarmatur mit einem hohen Innendruck und ggfs. einer hohen Temperatur beaufschlagt, dehnt sich das Gehäuse 1 im wesentlichen in radiale Richtung aus. Dies führte bisher zu einer ovalen Verformung der Spindeldurchführung, so daß die Dichtung im Bereich der Hauptachse des ovalen Querschnitts nicht mehr an der Spindel 4 anlag. Die Absperrarmatur wurde undicht.

Erfindungsgemäß hingegen läuft um die Spindeldurchführung 4 eine im Querschnitt kreisringförmige Aussparung 11 herum, die zum Innenraum des Gehäuses 1 hin offen ist. Der hülsenförmige Bereich zwischen der Spindel 3 und der Aussparung 11 bleibt auch bei einer Verformung des Gehäuses formstabil, so daß die Dichtungen 10 auch bei hohen Innendrücken eng an der Spindel anliegen. Die Ausnehmung 11 erstreckt sich im vorliegenden Fall bis in einen Gehäuseansatz 12 hinein.

Im Rahmen der Erfindung sind durchaus Abwandlungen der beschriebenen Konstruktion möglich. Es sein nochmals betont, daß anstelle der Spindel auch eine drehbare Spindelmutter zur Aufnahme einer Gewindespindel einsetzbar ist, wobei der Schließkörper 2 als Ventilteller ausgebildet sein kann, der beim Herunterschrauben der Spindel gegen einen Ventilsitz abdichtet. Ferner ist es möglich die Spindeldurchführung und die Aussparung in einem Schraubdeckel vorzusehen, der auf das Gehäuse aufgeschraubt wird. Schließlich kann die Spindelachse auch schräg zur Fließrichtung des in dem Gehäuse geführten Mediums orientiert sein. Wesentlich bei allen Ausführungsformen ist jedoch, daß die zum Innenraum des Gehäuses hin offene Aussparung um die Spindeldurchführung herumläuft.

## Patentansprüche

1. Absperrarmatur mit
- einem äußeren Gehäuse (1) aus thermoplastischem Kunststoff, das eine Spindeldurchführung (4) aufweist,
- einer Spindel (3), die in der Spindeldurchführung (4) beweglich angeordnet ist, und mit
- einem Schließkörper (2), der im Gehäuse (1) angeordnet und mit der Spindel verbunden ist,
wobei die Spindel (3) gegen das äußere Gehäuse (1) abgedichtet ist,
**dadurch gekennzeichnet**,
- daß das Gehäuse (1) eine rinnenförmige Aussparung (11) aufweist, die um die Spindeldurchführung (4) herumläuft und zum Innenraum des Gehäuses hin offen ist.

2. Absperrarmatur nach Anspruch 1, **dadurch gekennzeichnet, daß** zwischen der Spindel (3) und der Spindeldurchführung (4) mindestens eine Dichtung (10) angeordnet ist, und daß sich die Aussparung (11) in Achsrichtung der Spindel bis mindestens auf die Höhe der Dichtung erstreckt.

3. Absperrarmatur nach Anspruch 2, **dadurch gekennzeichnet, daß** die Dichtung (10) als handelsübliches Wellendichtelement, vorzugsweise als O-Ring ausgebildet ist und daß die Spindel (3)drehbar in der Spindeldurchführung (4) gelagert ist.

4. Absperrarmatur nach einem der Ansprüche 1 bis 3, **dadurch gekennzeichnet, daß** die Spindeldurchführung (4) teilweise von einem Gehäuseansatz (12) umgeben ist und daß sich die Aussparung (11) bis in den Gehäuseansatz hineinerstreckt.

5. Absperrarmatur nach einem der Ansprüche 1 bis 4, **dadurch gekennzeichnet, daß** die Aussparung (11) einen im wesentlichen kreisringförmigen Querschnitt aufweist.

6. Absperrarmatur nach einem der Ansprüche 1 bis 5, **dadurch gekennzeichnet, daß** das Gehäuse (1) im wesentlichen zylindrisch ausgebildet ist und daß die Spindeldurchführung (4) im wesentlichen radial angeordnet ist.

## Claims

1. Shutoff valve with
- an outer housing (1) of a thermoplastic plastics material which comprises a spindle lead-through (4),
- a spindle (3) disposed in a mobile manner in the spindle lead-through (4), and with
- a closing body (2) which is disposed in the housing (1) and connected to the spindle,
wherein the spindle (3) is sealed off from the outer housing (1),
**characterised in that** the housing (1) comprises a channel-shaped recess (11) which extends around the spindle lead-through (4) and is open towards the interior space of the housing.

2. Shutoff valve according to Claim 1, **characterised in that** at least one seal (10) is disposed between the spindle (3) and the spindle lead-through (4), and that the recess (11) extends in the axial direction of the spindle at least as far as the height of the seal.

3. Shutoff valve according to Claim 2, **characterised in that** the seal (10) is formed as a commercially available shaft sealing element, preferably as an O-ring, and that the spindle (3) is rotatably;mounted in the spindle lead-through (4).

4. Shutoff valve according to any one of Claims 1 to 3,
**characterised in that** the spindle lead-through (4) is partly surrounded by a housing projection (12), and that the recess (11) extends into the housing projection.

5. Shutoff valve according to any one of Claims 1 to 4,
**characterised in that** the recess (11) has a substantially circular ring-shaped cross section.

6. Shutoff valve according to any one of Claims 1 to 5,
**characterised in that** the housing (1) is substantially cylindrical, and that the spindle lead-through (4) is disposed substantially radially.

## Revendications

1. Robinet d'isolement comprenant
- un corps extérieur (1) en matériau synthétique thermoplastique qui présente un passage de tige (4),
- une tige (3) qui est montée mobile dans le passage de tige (4), et
- un obturateur (2) qui est monté dans le corps (1) et joint à la tige, l'étanchéité étant réalisée entre la tige (3) et le corps extérieur (1),
**caractérisé par le fait**
- **que** le corps (1) présente un évidement en forme de rigole (11) qui s'étend autour du passage de tige (4) et est ouvert vers l'intérieur du corps.

2. Robinet d'isolement selon la revendication 1, **caractérisé par le fait qu'**entre la tige (3) et le passage de tige (4) est placé au moins un joint d'étanchéité (10), et que l'évidement (11) s'étend dans la direction axiale de la tige au moins jusqu'à la hauteur de ce joint d'étanchéité.

3. Robinet d'isolement selon la revendication 2, **caractérisé par le fait que** le joint d'étanchéité (10) est un élément d'étanchéité courant pour arbre, de préférence un joint torique, et que la tige (3) est montée tournante dans le passage de tige (4).

4. Robinet d'isolement selon l'une des revendications 1 à 3, **caractérisé par** le fait le passage de tige (4) est entouré partiellement par un appendice (12) du corps et que l'évidement (11) s'étend jusque dans cet appendice.

5. Robinet d'isolement selon l'une des revendications 1 à 4, **caractérisé par le fait que** l'évidement (11) présente une section sensiblement en forme de couronne circulaire.

6. Robinet d'isolement selon l'une des revendications 1 à 5, **caractérisé par** le fait le corps (1) est dans l'ensemble cylindrique et que le passage de tige (4) est orienté sensiblement radialement.
